# EUROPÄISCHE PATENTANMELDUNG

(11) **EP 1 384 911 A2**
(43) Veröffentlichungstag der Anmeldung: **28.01.2004**
(21) Anmeldenummer: 03013695.6
(22) Anmeldetag: 17.06.2003
(51) Int. Cl.: F16D 21/06, F16D 13/64

(54) **Doppelkupplungsanordnung**

(30) Priorität: 25.07.2002 DE 10233791; 22.11.2002 DE 10254902
(71) Anmelder: ZF Sachs AG, 97424 Schweinfurt (DE)
(72) Erfinder: Feldhaus, Reinhard, Dipl.-Ing., 97646 Niederwerrn (DE); Heiartz, Markus, Dipl.-Ing., 97084 Würzburg (DE); Kister, Igor, Dipl.-Ing.(FH), 97080 Würzburg (DE); Peterseim, Michael, Dipl.-Ing.(FH), 97493 Bergrheinfeld (DE); Orlamünder, Andreas, Dipl.-Ing., 97422 Schweinfurt (DE); Vogt, Sebastian, Dipl.-Ing., 97616 Bad Neustadt (DE)

(57) **Zusammenfassung**

Eine Doppelkupplungsanordnung umfasst einen Eingangsbereich (60), welcher über eine Drehkopplungsanordnung (18) an ein Antriebsorgan ankoppelbar oder angekoppelt ist, wobei die Drehkopplungsanordnung (18) ein mit dem Antriebsorgan zur gemeinsamen Drehung um eine Drehachse (A) verbindbares Kopplungselement (18) mit einer Verzahnungsformation (64) aufweist, mit welcher eine Verzahnungsformation (68) des Eingangsbereichs (60) in Drehkopplungseingriff steht oder bringbar ist.

## Beschreibung

Die vorliegende Erfindung betrifft eine Doppelkupplungsanordnung, umfassend einen Eingangsbereich, welcher über eine Drehkopplungsanordnung an ein Antriebsorgan ankoppelbar oder angekoppelt ist.

Doppelkupplungen finden im modernen Fahrzeugbau aufgrund der bei Durchführung von Schaltvorgängen sich ergebenden Vorteile zunehmend Einsatz. Da Doppelkupplungen im Vergleich zu normalen Einfachkupplungen vor allem in axialer Richtung eine größere Baulänge aufweisen, ist es im Allgemeinen erforderlich, diese an beiden axialen Seiten abzustützen. An der Antriebsseite, also der dem Antriebsaggregat zugewandten Seite, findet diese Abstützung beispielsweise über eine Torsionsschwingungsdämpferanordnung oder eine sonstige plattenartige Kopplungsanordnung statt. An der Abtriebsseite, also der dem Getriebe zugewandten Seite, ist im Allgemeinen der Eingangsbereich der Doppelkupplung über ein Drehentkopplungslager am Getriebegehäuse abgestützt. Aufgrund dieser Abstützung an beiden axialen Seiten ist es erforderlich, das gesamte Doppelkupplungssystem in zwei Bereiche aufzugliedern, von welchen einer bei der Montage zunächst mit dem Antriebsaggregat gekoppelt wird, während der andere mit dem Getriebegehäuse gekoppelt wird. Beim bzw. nach dem Heranführen des Getriebegehäuses mit dem daran vorgesehenen Bereich der Doppelkupplung an das Antriebsaggregat werden dann die beiden Doppelkupplungsbereiche miteinander verbunden. Hierzu ist es beispielsweise bekannt, Schraubverbindungen einzusetzen, welche bei Erlangung einer sehr stabilen Kopplung das Problem aufweisen, dass der Bereich, in welchem die Schraubverbindung herzustellen ist, von außen nur schwer zugänglich ist.

Es ist die Aufgabe der vorliegenden Erfindung, eine Doppelkupplungsanordnung bereitzustellen, bei welcher die Integration in einen Antriebsstrang vereinfacht bzw. verbessert werden kann.

Gemäß der vorliegenden Erfindung wird diese Aufgabe gelöst durch eine Doppelkupplungsanordnung, umfassend einen Eingangsbereich, welcher über eine Drehkopplungsanordnung an ein Antriebsorgan ankoppelbar oder angekoppelt ist, wobei die Drehkopplungsanordnung ein mit dem Antriebsorgan zur gemeinsamen Drehung um eine Drehachse verbindbares Kopplungselement mit einer Verzahnungsformation aufweist, mit welcher eine Verzahnungsformation des Eingangsbereichs in Drehkopplungseingriff steht oder bringbar ist.

Durch den Einsatz von Verzahnungsformationen, welche den an die Getriebeseite anzukoppelnden Bereich der Doppelkupplung mit dem an ein Antriebsaggregat anzukoppelnden Bereich eines gesamten Doppelkupplungssystems drehfest verbinden, wird bei gleichwohl erhaltener sehr stabiler Drehmomentübertragungskopplung eine einfache Montierbarkeit durch axiales Aufeinanderzubewegen und Ineingriffbringen erhalten.

Dabei kann beispielsweise vorgesehen sein, dass die Verzahnungsformation an dem Kopplungselement eine Außenverzahnung ist und dass die Verzahnungsformation des Eingangsbereichs eine Innenverzahnung ist.

Der Einsatz von durch Aufeinanderzubewegen in Eingriff bringbaren Verzahnungsformationen erfordert, dass ein gewisses Bewegungsspiel zwischen diesen Verzahnungsformationen vorhanden ist. Vor allem bei Auftreten von Drehmomentschwingungen führt ein derartiges Bewegungsspiel im Bereich von Verzahnungen jedoch zu Klappergeräuschen und zu einem übermäßigen Verschleiß. Es kann daher gemäß einem weiteren Aspekt der vorliegenden Erfindung eine Vorspannanordnung vorgesehen sein zum Vorspannen der Verzahnungsformation des Kopplungselements und der Verzahnungsformation des Eingangsbereichs in festen Drehkopplungskontakt. Dazu wird beispielsweise vorgeschlagen, dass die Vorspannanordnung wenigstens ein die Verzahnungsformationen in Umfangsrichtung bezüglich einander vorspannendes Federelement umfasst.

Den bei Auftreten von Drehmomentschwankungen bzw. Drehmomentschwingungen möglicherweise generierten Klappergeräuschen im Bereich von Verzahnungen kann weiter entgegengetreten werden durch eine Reibanordnung zum Erzeugen einer einer Relativbewegung zwischen dem Kopplungselement und dem Eingangsbereich entgegenwirkenden Reibkraft. Hier kann beispielsweise vorgesehen sein, dass die Reibanordnung wenigstens ein an dem Eingangsbereich oder dem Kopplungselement festgelegtes und an der jeweils anderen Baugruppe reibend angreifendes, in Reibanlage vorgespanntes Reibelement aufweist.

Insbesondere beim Einsatz in kleiner gebauten, kompakten Fahrzeugen, in welchen im Allgemeinen im Motorraum auch ganz wenig Bauraum zur Verfügung steht, kann gemäß einem vorteilhaften Aspekt der vorliegenden Erfindung vorgesehen sein, dass das Kopplungselement in einem radial inneren Bereich zur Anbindung an das Antriebsorgan ausgebildet ist und in seinem radial äußeren Bereich die Verzahnung aufweist. Weiterhin ist es aber selbstverständlich möglich, dass das Kopplungselement ein Bauteil einer Sekundärseite einer mit ihrer Primärseite an das Antriebsorgan anzubindenden Torsionsschwingungsdämpferanordnung ist.

Die vorliegende Erfindung wird nachfolgend mit Bezug auf die beiliegenden Zeichnungen detailliert beschrieben. Es zeigt:
- Fig. 1: eine Teil-Längsschnittansicht einer Doppelkupplung;
- Fig. 2: eine in der Fig. 1 entsprechende Ansicht einer alternativ ausgestalteten Doppelkupplungsanordnung;
- Fig. 3: eine Detailansicht zweier miteinander in Eingriff stehender Verzahnungen der in Fig. 2 dargestellten Ausgestaltungsvariante, betrachtet in Achsrichtung;
- Fig. 4: zwei miteinander in Eingriff stehende Verzahnungen, betrachtet im Längsschnitt.

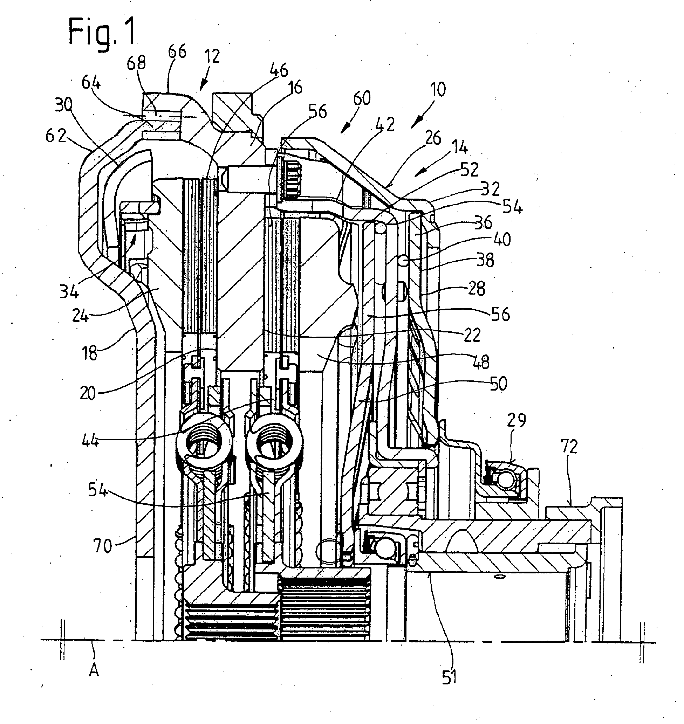

Die Fig. 1 zeigt eine Doppelkupplungsanordnung 10. Die Doppelkupplungsanordnung 10 umfasst im Wesentlichen zwei Kupplungsbereiche 12, 14, durch welche wahlweise ein-Drehmoment von einer Antriebswelle, beispielsweise Kurbelwelle einer Brennkraftmaschine, auf eine von zwei zueinander koaxial angeordneten Getriebeeingangswellen übertragen werden kann.

Eine Widerlagerplatte 16 ist in ihrem radial äußeren Bereich über eine Platte 18 oder dergleichen drehfest an die bereits angesprochene Antriebswelle anzukoppeln. Die Widerlagerplatte 16 bildet mit ihren beiden in Richtung einer Drehachse A weisenden Flächen 20, 22 jeweils Widerlagerbereiche für die beiden Kupplungsbereiche 12, 14.

Der erste Kupplungsbereich 12 umfasst eine Anpressplatte 24, die mit der Widerlagerplatte 16 beispielsweise über Tangentialblattfedern oder dergleichen drehfest, bezüglich dieser jedoch in Richtung der Drehachse A verlagerbar gekoppelt ist. Über eine Kraftübertragungsanordnung 26 und ein Kraftbeaufschlagungselement 28 kann eine Einrückkraft von einem Betätigungssystem 29 des ersten Kupplungsbereichs 12 auf die Anpressplatte 24 übertragen werden. Die Kraftübertragungsanordnung 26 umfasst zwei topf- oder schalenartig ausgebildete Kraftübertragungselemente 30, 32, welche die Widerlagerplatte 16 überbrücken und in ihrem radial äußeren Bereich miteinander verbunden sind. Das Kraftübertragungselement 30 kann die Anpressplatte 24 unter Zwischenlagerung einer Verschleißnachstellvorrichtung 34 beaufschlagen. Das Kraftbeaufschlagungselement 28 ist in seinem radial äußeren Bereich 36 an dem Kraftübertragungselement 32 abgestützt und ist in einem radial weiter innen liegenden Bereich 38 über einen Drahtring 40 o.dgl. an der Außenseite eines topfartig ausgebildeten und mit der Widerlagerplatte 16 verbundenen Gehäuses 42 abgestützt. Radial innen beaufschlagt dann das Betätigungssystem zur Durchführung von Einrückvorgängen des ersten Kupplungsbereichs 12 das Kraftbeaufschlagungselement 28. Wird durch entsprechende Krafterzeugung die Anpressplatte 24 in Richtung auf die Fläche 20 der Widerlagerplatte 16 zu verschoben, so wird eine Kupplungsscheibe 44 mit ihren Reibbelägen 46 zwischen der Widerlagerplatte 16 und der Anpressplatte 24 geklemmt und somit eine Drehmomentübertragungsverbindung zu einer der Getriebeeingangswellen hergestellt.

Der zweite Kupplungsbereich 14 umfasst ebenfalls eine Anpressplatte 48, die mit der Widerlagerplatte 16 bzw. dem Gehäuse 42 beispielsweise wiederum durch Tangentialblattfedern o. dgl., die auch eine Lüftkraft erzeugen können, drehfest, jedoch in Richtung der Achse A bewegbar verbunden ist. Ein Kraftbeaufschlagungselement 50 des zweiten Kupplungsbereichs 14 ist in seinem radial äußeren Bereich 52 beispielsweise über einen Drahtring 54 oder dergleichen an der Innenseite des Gehäuses 42 abgestützt und kann mit seinem radial weiter innen gelegenen Bereich 56 die Anpressplatte 48 beaufschlagen. Ein Betätigungssystem 51 beaufschlagt das Kraftbeaufschlagungselement 50 in seinem radial inneren Endbereich, um zur Durchführung von Einkuppelvorgängen des zweiten Kupplungsbereichs 14 die Anpressplatte 48 in Richtung auf die Fläche 22 der Widerlagerplatte 16 zu zu bewegen. Dabei wird eine Kupplungsscheibe 54 mit ihren Reibbelägen 56 zwischen der Widerlagerplatte 16 und der Anpressplatte 48 geklemmt und somit eine Drehmomentübertragungsverbindung zur anderen Getriebeeingangswelle hergestellt.

Vorangehend ist der prinzipielle Aufbau einer Doppelkupplung 10 beschrieben worden. Es ist selbstverständlich, dass hier in verschiedenen Bereichen konstruktive Änderungen vorgesehen sein können. So könnte beispielsweise die Widerlagerplatte 16, die zusammen mit den beiden Anpressplatten 24, 48, dem Gehäuse 42 und den damit drehfest gekoppelten Komponenten einen Eingangsbereich 60 der Doppelkupplung 10 bildet, über eine Torsionsschwingungsdämpferanordnung an eine Antriebswelle angekoppelt sein. Auch könnte selbstverständlich beim zweiten Kupplungsbereich 14 zwischen der Anpressplatte 48 und dem Kraftbeaufschlagungselement 56 eine Verschleißnachstellvorrichtung vorgesehen sein.

Die beiden Kraftbeaufschlagungselemente 28, 50 können als ringscheibenartige Bauteile ausgebildet sein, die eine Mehrzahl von Kraftübertragungshebeln bereitstellen und im Wesentlichen keine eigene Kraftkomponente zur Beaufschlagung der jeweils zugeordneten Anpressplatte 24, 28 bereitstellen. Durch die Betätigungssysteme wird eine Einrückkraft geliefert, so dass hier eine Doppelkupplungsanordnung 10 mit zwei Kupplungsbereichen 12, 14 des Normal-Offen-Typs vorgesehen ist. Selbstverständlich könnten als Kraftbeaufschlagungselemente auch Membranfedern oder dergleichen Einsatz finden, so dass durch die zugeordneten Betätigungssysteme dann jeweils eine Ausrückkraft bereitzustellen ist.

Die Platte 18, über welche der allgemein mit 60 bezeichnete Eingangsbereich der Doppelkupplungsanordnung 10 drehfest an eine Antriebswelle oder dergleichen angekoppelt werden kann, ist im Allgemeinen aus Blechmaterial aufgebaut und weist an ihrem radial äußeren Bereich 62 eine durch Umformung oder/und materialabhebende Bearbeitung gebildete Verzahnungsformation 64 auf, welche im Wesentlichen als Außenumfangsverzahnung ausgebildet ist. Am Eingangsbereich 60 bzw. der Widerlagerplatte 16 desselben ist im Bereich von mehreren in Umfangsrichtung aufeinander folgend angeordneten Kopplungsfüßen 66 eine Verzahnungsformation 68 als Innenumfangsverzahnung bereitgestellt. Durch axiales Aufeinanderzubewegen kann also die Platte 18 mit dem Eingangsbereich 60 der Doppelkupplungsanordnung 10 zur Drehmomentübertragung verbunden werden.

Bei der Integration einer derartigen Doppelkupplungsanordnung 10 in einem Antriebsstrang kann so vorgegangen werden, dass die Platte 18 zunächst in ihrem radial inneren Bereich 70 an eine Kurbelwelle oder dergleichen angeschraubt oder in sonstiger Weise festgelegt wird. Der verbleibende Bereich der Doppelkupplungsanordnung 10, insbesondere der Eingangsbereich 60, wird über eine Abstützanordnung 72 an einem Getriebegehäuse festgelegt und dabei auch mit den Getriebeeingangswellen drehfest verbunden. Beim Heranführen des Getriebegehäuses mit dem daran gehaltenen Eingangsbereich 60 an das Antriebsaggregat können dann die beiden Verzahnungsformationen 64, 68 in Eingriff treten und auf diese Weise dann die drehfeste Kopplung des Eingangsbereichs 60 mit einem Antriebsaggregat realisieren.

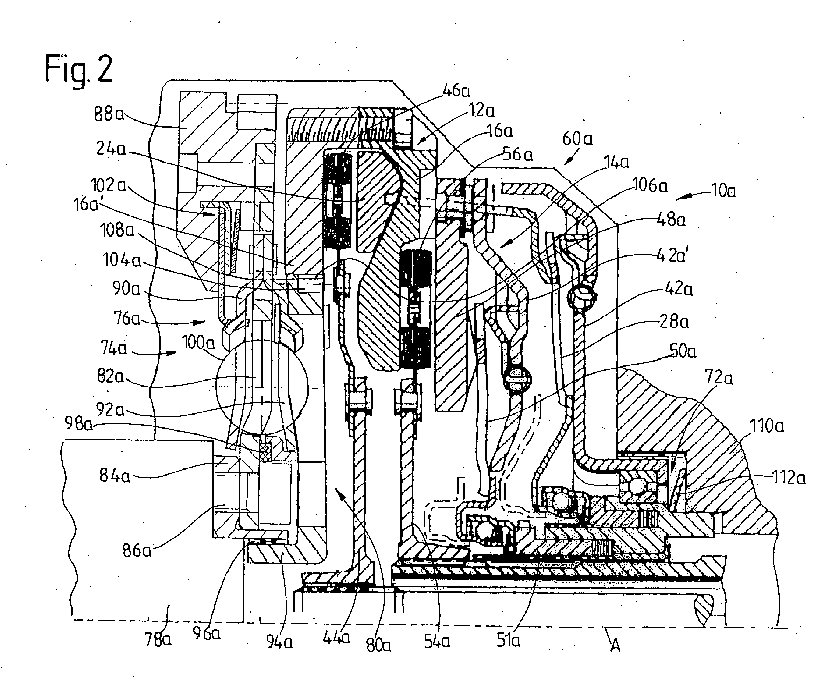

Eine alternative Ausgestaltungsform einer Doppelkupplungsanordnung 10 ist in Fig. 2 gezeigt. Komponenten, welche vorangehend beschriebenen Komponenten hinsichtlich Aufbau bzw. Funktion entsprechen, sind mit dem gleichen Bezugszeichen unter Hinzufügung eines Anhangs "a" bezeichnet.

Man erkennt zunächst, dass der Eingangsbereich 60a zwei Widerlagerplatten 16a, 16a' umfasst. Die Kupplungsscheibe 44a des ersten Kupplungsbereichs 12a ist durch die Anpressplatte 24a gegen die Widerlagerplatte 16a' pressbar. Die Kupplungsscheibe 54a ist durch die Anpressplatte 48a gegen die Widerlagerplatte 16a pressbar und zwar in der gleichen Richtung, in welcher auch die Kupplungsscheibe 44a pressbar ist. Dies bedeutet, dass zur Durchführung des Einkuppelvorgangs beide Anpressplatten 24a, 48a in der gleichen Richtung zu bewegen sind. Das Gehäuse 12a umfasst hier zwei Gehäuseteile 42a, 42a', die miteiander bzw. der Widerlagerplatte 16a fest verbunden sind. Das Kraftbeaufschlagungselement 28a des ersten Kupplungsbereichs 12a stützt sich an dem äußeren Gehäuseteil 42a ab, während das Kraftbeaufschlagungselement 50a des zweiten Kupplungsbereichs 14a sich an dem inneren Gehäuseteil 42a' abstützt.

Es ist ferner eine Torsionsschwingungsdämpfertanordnung 74a vorgesehen. Diese umfasst eine Primärseite 76a, welche drehfest an die Antriebswelle 78a angekoppelt ist. Über eine Sekundärseite 80a ist die Torsionsschwingungsdämpferanordnung 74a mit dem Eingangsbereich 60a gekoppelt.

Die Primärseite 76a umfasst ein Zentralscheibenelement 82a, das in seinem radial inneren Bereich zusammen mit einem nachfolgend noch erwähnten Lagerungselement 84a unter Einsatz von Schraubbolzen 86a an die Antriebswelle 78a angebunden ist. Radial außen ist mit dem Zentralscheibenelement 82a ein Schwungmasseteil 88a der Primärseite 76a fest gekoppelt.

Die Sekundärseite 80a umfasst zwei Deckscheibenelemente 90a, 92a, die in ihrem radial inneren Bereich beidseits des Zentralscheibenelements 82a liegen und die radial außen miteinander durch Vernieten oder dergleichen fest verbunden sind. Im radialen Bereich dieser Vernietung weisen an mehreren Umfangspositionen die Deckscheibenelemente 90a, 92a Aussparungen aus, durch welche hindurch Verlängerungsarme des Zentralscheibenelements 82a greifen, um dort mit dem Schwungmasseteil 88a gekoppelt zu werden. Auf diese Art und Weise ist gleichzeitig auch eine Drehwinkelbegrenzung für die Primärseite 76a und die Sekundärseite 80a vorgesehen. Die Sekundärseite 80a umfast ferner ein Schwungmasseteil 94a, das mit dem Deckscheibenelement 92a durch Vernietung oder dergleichen fest verbunden ist. Radial innen weisen sowohl das Lagerungselement 84a als auch das Schwungmasseteil 94a axial sich erstreckende zylindrische Ansätze auf, zwischen welchen ein Radiallager 96a vorgesehen ist, um die Sekundärseite 80a der Torsionsschwingungsdämpferanordnung 74a in radialer Richtung bezüglich der Primärseite zu lagern. Über ein Axiallager 98a ist die Sekundärseite 80a axial bezüglich der Primärseite 76a abgestützt.

Um eine Relativdrehung zwischen der Sekundärseite 80a und Primärseite 76a zu ermöglichen, sind in an sich bekannter Weise mehrere in Umfangsrichtung aufeinander folgend angeordnete Dämpferfedern 100a vorgesehen, die in jeweiligen Federfenstern der Sekundärseite 80a und der Primärseite 76a angeordnet sind und unter deren Kompression diese beiden Baugruppen sich bezüglich einander um die Drehachse A drehen können. Es ist ferner eine ggf. auch verschleppt wirkende Festreibeinrichtung 102a vorgesehen, um bei auftretender Relativdrehung zwischen Primärseite 76a und Sekundärseite 80a Schwingungsenergie in Reibenergie und somit Wärmeenerge umzuwandeln.

Zur Kopplung der Torsionsschwingungsdämpferanordnung 74a mit dem Eingangsbereich 60a weisen das Schwungmasseteil 94a und die Widerlagerpelatte 16a', welche beide grundsätzlich ringscheibenartig ausgebildet sind und zueinander koaxial angeordnet sind, jeweilige Verzahnungsformationen 104a, 106a auf. Die Verzahnungsformation 104a ist eine Außenumfangsverzahnung, während die Verzahnungsformation 106a eine Innenumfangsverzahnung ist. Durch axiales Heranbewegen des Eingangsbereichs 60a an die Torsionsschwingungsdämpferanordnung 74a, welche zuvor bereits an der Welle 78a montiert sein kann, werden diese beiden Verzahnungsformationen 104a, 106a in Eingriff gebracht, so dass eine Drehkopplung zwischen der Torsionsschwingungsdämpferanordnung 74a, nämlich der Sekundärseite 80a derselben, und dem Eingangsbereich 60a sichergestellt ist. Man erkennt, dass an dem Schwungmasseteil 94a ein Axialanschlagbereich 108a vorgesehen ist, an welchem bei dem axialen Heranbewegen die Widerlagerplatte 16a' beispielsweise mit ihrer Verzahnungsformation 106a in Anlage gelangt, so dass eine definierte Axialpositionierung vorgegeben ist. Um diesen Eingriff in axialer Richtung definiert beizubehalten und um gleichzeitig auch eine definierte Axialabstützung der Sekundärseite 80a an der Primärseite 76a zu gewährleisten, umfasst die Abstützanordnung, mit welcher der Eingangsbereich 60a über das Gehäuseteil 42a an einem Getriebegehäuse 110a abgestützt ist, eine Vorspannfeder 112a, welche den Eingangsbereich 60a, welcher grundsätzlich bezüglich des Getriebegehäuses 110a drehbar ist, axial in Richtung auf die Antriebswelle 78a vorspannt.

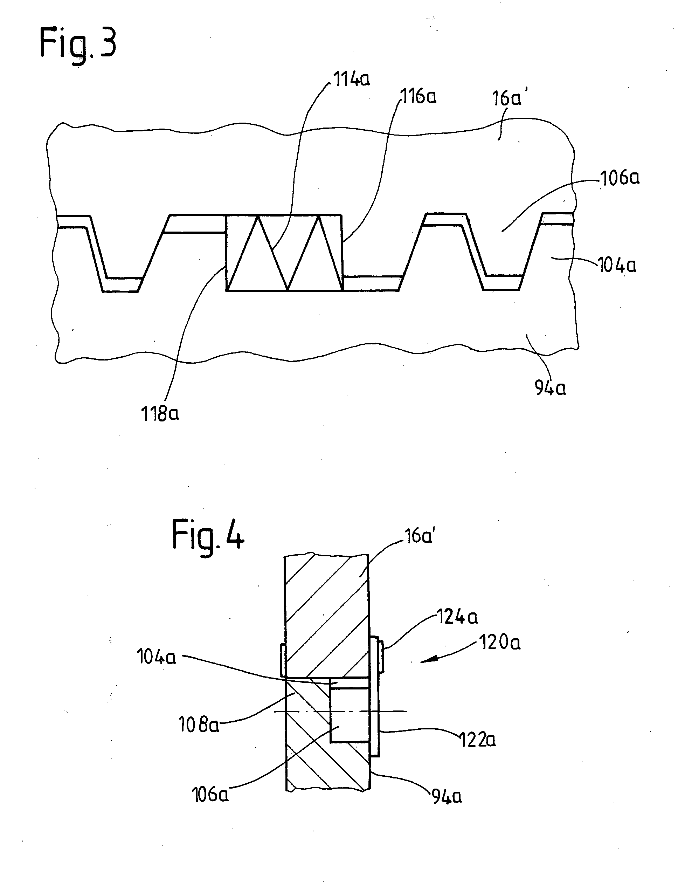

In Fig. 3 ist eine besondere Ausgestaltungsform der beiden miteinander in Drehmitnahmeeingriff gebrachten Verzahnungsformationen 104a, 106a gezeigt. Man erkennt hier, selbstverständlich in übertriebener Art und Weise, dass die beiden Verzahnungsformationen 104a, 106a im Allgemeinen so ausgebildet sind, dass ein gewisses Bewegungsspiel zwischen diesen vorhanden sind, wodurch das axiale Ineinandereinfügen ermöglicht bzw. erleichtert wird. Dieses Umfangsbewegungsspiel hätte jedoch im Drehbetrieb die Erzeugung von Klappergeräuschen zur Folge. Um dem entgegenzutreten, sind an mehreren Umfangspositionen Vorspannfedern 114a vorgesehen, die an einer jeweiligen Abstützkante 116a der Widerlagerplatte 16a' und 118a des Schwungmasseteils 94a in Umfangsrichtung abgestützt sind und unter deren Vorspannung die beiden Verzahnungsformationen 104a, 106a in festen gegenseitigen Anlagekontakt gepresst sind. Auf diese Art und Weise wird das Auftreten von Klappergeräuschen vermieden.

Bei der in Fig. 4 gezeigten Ausgestaltungsform sorgt eine allgemein mit 120a bezeichnete Reibeinrichtung dafür, dass einer im Rahmen des angesprochenen Bewegungsspiels möglichen Relativbewegung zwischen dem Schwungmasseteil 94a und der Widerlagerplatte 16a' entgegengewirkt wird. Diese Reibeinrichtung 120a kann an der Widerlagerplatte 16a' eine Mehrzahl von in Umfangsrichtung aufeinander folgend angeordneten federelastischen Reibplatten 122a' aufweisen, die an der Widerlagerplatte 16a' beispielsweise durch Nietbolzen 124a oder dergleichen festgelegt sind. Diese Reibplatten 122a kommen bei dem axialen Heranbewegen der Widerlagerplatte 16a' an das Schwungmasseteil 94a in Anlage an diesem Schwungmasseteil 94a und pressen unter ihrer eigenen elastischen Vorspannwirkung gegen dieses Teil. Auf diese Art und Weise wird bei einer Umfangsrelativbewegung zwischen der Widerlagerplatte 16a' und dem Schwungmasseteil 94a ebenfalls Bewegungsenergie in Reibenergie und somit Wärmeenergie umgesetzt. Es ist selbstverständlich möglich, die beiden in den Fig. 3 und 4 gezeigten Ausgestaltungsvarianten zu kombinieren. Ebenso ist es selbstverständlich möglich, diese Varianten bei der Ausgestaltungsform gemäß Fig. 1 vorzusehen, also einer Ausgestaltungsform, wo der Eingangsbereich nicht an eine Torsionsschwingungsdämpferanordnung, sondern ein Kopplungsplattenteil oder dergleichen angebunden ist.

## Patentansprüche

1. Doppelkupplungsanordnung, umfassend einen Eingangsbereich (60; 60a), welcher über eine Drehkopplungsanordnung (18; 74a) an ein Antriebsorgan ankoppelbar oder angekoppelt ist, wobei die Drehkopplungsanordnung (18; 74a) ein mit dem Antriebsorgan zur gemeinsamen Drehung um eine Drehachse (A) verbindbares Kopplungselement (18; 94a) mit einer Verzahnungsformation (64; 104a) aufweist, mit welcher eine Verzahnungsformation (68; 106a) des Eingangsbereichs (60; 60a) in Drehkopplungseingriff steht oder bringbar ist.

2. Doppelkupplungsanordnung nach Anspruch 1, **dadurch gekennzeichnet, dass** die Verzahnungsformation (64; 104a) an dem Kopplungselement (18; 94a) eine Außenverzahnung ist und dass die Verzahnungsformation (68; 106a) des Eingangsbereichs eine Innenverzahnung ist.

3. Doppelkupplungsanordnung nach Anspruch 1 oder 2, **gekennzeichnet durch** eine Vorspannanordnung (114a) zum Vorspannen der Verzahnungsformation (104a) des Kopplungselements (94a) und der Verzahnungsformation (106a) des Eingangsbereichs (60a) in festen Drehkopplungskontakt.

4. Doppelkupplungsanordnung nach Anspruch 3, **dadurch gekennzeichnet, dass** die Vorspannanordnung (114a) wenigstens ein die Verzahnungsformationen (104a, 106a) in Umfangsrichtung bezüglich einander vorspannendes Federelement (114a) umfasst.

5. Doppelkupplungsanordnung nach einem der Ansprüche 1 bis 4, **gekennzeichnet durch** eine Reibanordnung (120a) zum Erzeugen einer einer Relativbewegung zwischen dem Kopplungselement (94a) und dem Eingangsbereich (60a) entgegenwirkenden Reibkraft.

6. Doppelkupplungsanordnung nach Anspruch 5, **dadurch gekennzeichnet, dass** die Reibanordnung (120) wenigstens ein an dem Eingangsbereich (60a) oder dem Kopplungselement (94a) festgelegtes und an der jeweils anderen Baugruppe reibend angreifendes, in Reibanlage vorgespanntes Reibelement (122a) aufweist.

7. Doppelkupplungsanordnung nach einem der Ansprüche 1 bis 6, **dadurch gekennzeichnet, dass** das Kopplungselement (18) in einem radial inneren Bereich (70) zur Anbindung an das Antriebsorgan ausgebildet ist und in seinem radial äußeren Bereich (62) die Verzahnungsformation (64) aufweist.

8. Doppelkupplungsanordnung nach einem der Ansprüche 1 bis 6, **dadurch gekennzeichnet, dass** das Kopplungselement (94a) ein Bauteil einer Sekundärseite (80a) einer mit ihrer Primärseite (76a) an das Antriebsorgan (78a) anzubindenden Torsionsschwingungsdämpferanordnung (74a) ist.
